(19) Europäisches Patentamt
European Patent Office
Office européen des brevets

(11) EP 4 751 569 A1

(12) **EUROPEAN PATENT APPLICATION**

(43) Date of publication:
**03.06.2026 Bulletin 2026/23**

(21) Application number: **24216269.1**

(22) Date of filing: **28.11.2024**

(51) International Patent Classification (IPC):
***A01N 31/08*** *(2006.01)* ***A01N 43/90*** *(2006.01)*
***A01P 1/00*** *(2006.01)* ***A01N 65/28*** *(2009.01)*
***A01N 27/00*** *(2006.01)*

(52) Cooperative Patent Classification (CPC):
(C-Sets available)
**A01P 1/00; A01N 31/08; A01N 43/90** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Unilever IP Holdings B.V.**
**6708 WH Wageningen (NL)**

(72) Inventors:
- **FANG, Zhou**
**6708 WH Wageningen (NL)**
- **FENG, Keke**
**6708 WH Wageningen (NL)**
- **SHEN, Jun**
**6708 WH Wageningen (NL)**
- **YANG, Lizhe**
**6708 WH Wageningen (NL)**

(74) Representative: **Unilever Patent Group**
**Bronland 14**
**6708 WH Wageningen (NL)**

(54) **COMPOSITION**

(57) A composition is disclosed comprising: a) chloroxylenol; and b) Eucalyptus extract.

EP 4 751 569 A1

(52) Cooperative Patent Classification (CPC): (Cont.)

C-Sets
**A01N 31/08, A01N 65/28, A01N 43/90,**
**A01N 27/00, A01N 27/00;**
**A01N 43/90, A01N 27/00**

## Description

### Field of the Invention

This invention relates to a composition, uses and methods relating thereto. In particular, a composition for providing disinfecting treatment and antimicrobial effectiveness.

### Background of the Invention

The environment contains a variety of microorganisms including bacteria, fungi, spores, and viruses. These microorganisms often accumulate on fabrics, floors, and various other hard or soft surfaces. Their proliferation can lead to both the deterioration of household objects and potential impacts on human health. The growing awareness and concern for health and hygiene have led to an increased demand for effective antimicrobial compositions. These compositions are particularly suitable for use on fabrics and hard surfaces like floors, walls, windows, and table tops, where microbial contamination is a common concern.

Chloroxylenol is widely recognized for its antimicrobial properties and is commonly used in various home care or personal care products, including disinfectants for laundry and hard surfaces. However, consumers are now seeking products that not only effective kill harmful microbes but also align with their preferences for safety and environmental sustainability. There is an increasing interest in developing compositions that incorporate natural, plant-based ingredients to meet consumer needs.

In addition, there is also a need to reduce the total amount of antimicrobial required in such a composition for use in an antimicrobial method. This need may for instance be driven by the desire for cost-efficiency, because such compositions are particularly relevant to developing countries. Moreover, reducing the amounts may also be beneficial for environmental reasons.

The present invention has been devised in the light of the above considerations. It has been found unexpectedly that a composition comprising chloroxylenol and Eucalyptus extract provides improved antimicrobial benefits.

### Summary of the Invention

In a first aspect, the present invention is directed to a composition comprising: a) chloroxylenol; and b) Eucalyptus extract.

In a second aspect, the present invention is directed to a method of cleaning and/or disinfecting a surface comprising the steps of:

i) applying a composition according to any embodiment of the first aspect to the surface; and
ii) optionally removing the composition from the surface.

In a third aspect, the present invention is directed to use of a composition according to any embodiment of the first aspect for cleaning and/or disinfecting a surface, preferably a hard surface.

In a fourth aspect, the present invention is directed to non-therapeutic use of a composition according to any embodiment of the first aspect for cleaning and/or disinfecting a skin surface. Alternatively, the present invention is directed to a composition according to any embodiment of the first aspect for use in cleaning and/or disinfecting a skin surface.

Non-therapeutic use or method means that the surface in contact with the composition according to any embodiment of the first aspect is not in need of medical treatment or the surface is not infected in a way that requires medical attention.

All other aspects of the present invention will more readily become apparent upon considering the detailed description and examples which follow.

### Detailed Description of the Invention

Except in the examples, or where otherwise explicitly indicated, all numbers in this description indicating amounts of material or conditions of reaction, physical properties of materials and/or use may optionally be understood as modified by the word "about".

All amounts are by weight of the final composition, unless otherwise specified. It should be noted that in specifying any ranges of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the

claims as being multiply dependent upon each other irrespective of the fact that claims may be found without multiple dependency or redundancy.

Where a feature is disclosed with respect to a particular aspect of the invention (for example a composition of the invention), such disclosure is also to be considered to apply to any other aspect of the invention (for example a method of the invention) *mutatis mutandis.*

Unless specified otherwise, amounts as used herein are expressed in percentage by weight based on the total weight of the composition and is abbreviated as "wt.%" or "weight %".

The term "disinfection" as used in the context of this invention refers to reduction of the number of viable microorganisms in a given medium or on a given surface by physical or chemical means. Typically, disinfection involves the destruction or inactivation of said microorganisms. Both animate and inanimate media and surfaces are contemplated. The term "microorganism" as used in the context of this invention includes, for example, fungi (such as yeast and mould), bacteria and algae.

The term "antimicrobial" as used in the context of this invention refers to a compound capable of killing, inhibiting the growth of or controlling the growth microorganisms at a locus; antimicrobial include bactericides, fungicides and algaecides.

The composition of the present invention is preferably a home care composition or a personal care composition. A home care composition is a composition used for treatment, cleaning, caring or conditioning of the home or any of its contents. The foregoing includes, but not limited to, chemicals, compositions, products, or combinations thereof relating to or having use or application in the treatment, cleaning, cleansing, caring or conditioning of surfaces, furniture and atmosphere of the home and household contents, such as clothes, fabrics and/or cloth fibers and the manufacture of all of the foregoing products. Examples of a home care composition include but not limited to liquid laundry compositions, powder laundry compositions, hand dishwash compositions, hard surface cleaning compositions, home surface sanitizers, disinfectants, unit-dose liquid compositions, or fabric conditioning compositions. A personal care composition is a composition for the treatment, cleaning, caring or conditioning of the person. The foregoing includes, but not limited to, chemicals, compositions, products, or combinations thereof relating to or having use or application in the treatment, cleansing or conditioning of the person (including in particular the skin, hair and oral cavity), and the manufacture of all the foregoing. Examples of a personal care composition include but not limited to leave-on skin lotions and creams, shampoos, conditioners, shower gels, soap bars, antiperspirants, deodorants, shave creams, depilatories, lipsticks, foundations, mascara, sunless tanners or sunscreen lotions. Home care products and personal care products are for example products marketed under mass market brands.

The composition of the present invention may further be used as or incorporated in industrial and/or institutional products. Industrial and institutional products are for example products being marketed under professional brands, with non-limiting examples being products for industrial, institutional, janitorial, and medical cleaning, cleaning-in-place, food services, veterinary, and agricultural products. Industrial and/or institutional products also include products for cleaning of the person (such as hand sanitisers) for medical offices, hospitals and/or other institutions.

Chloroxylenol

The composition of the present invention comprises chloroxylenol. Chloroxylenol, also known as parachlorometaxylenol (PCMX), is a phenolic compound with the chemical formula C8H9ClO, which is represented by the structure (I) below:

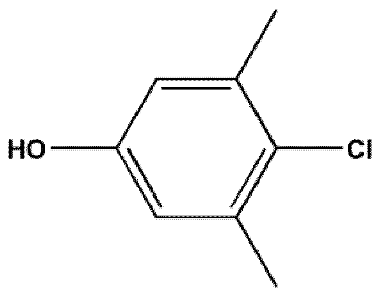

(I)

Chloroxylenol is sometimes referred to by its other names, including: parachlorometaxylenol; 4-chloro-3,5-xylenol; 4-chloro-3,5-dimethylphenol; 2-chloro-m-xylenol; 2-chloro-5-hydroxy-m-xylene; 2-chloro-5-hydroxy-m-xylene; 2-chloro-5-hydroxy-1,3-dimethylbenzene; 4-chloro-1-hydroxy-3,5-dimethyl benzene; and 3,5-dimethyl-4-chlorophenol.

Chloroxylenol is a desirable antimicrobial agent and is particularly effective against a wide variety of gram-positive and gram-negative bacteria.

The composition of the present invention preferably comprises from 0.001 to 20% by weight of chloroxylenol, more preferably from 0.01 to 15%, more preferably still from 0.1 to 10%, and most preferably from 0.5 to 5%, based on total weight of the composition and including all ranges subsumed therein.

Eucalyptus extract

The term "Eucalyptus extract" as used in the context of this invention refers to an extract obtained from a member of the Eucalyptus tree, for example, obtained from the Eucalyptus globulus tree. Eucalyptus globulus, also referred to as blue gum or Tasmanian blue gum tree. Preferably the Eucalyptus extract is Eucalyptus globulus leaf extract. Eucalyptus globulus leaf extract is an extract obtained from the leaves of the Eucalyptus globulus tree.

The Eucalyptus extract may be prepared through various methods, including steam distillation, solvent extraction and supercritical extraction. For example, the Eucalyptus extract can be prepared by a method comprising the steps of:

i) cleaning and drying the Eucalyptus leaves;
ii) extracting the Eucalyptus leaves by water and/or a solvent;
iii) filtering the extract and concentrating the filtrate by evaporation;
iv) optionally filtering the concentrated extract to further purify it.

In step (ii), if an extraction solvent is used instead of water, various solvents can be employed to effectively extract the desired compounds from the Eucalyptus leaves. Examples of suitable solvents include, but are not limited to, alcoholic solvents such as ethanol, acetone, hexane, esters, polyhydric alcohols such as propylene glycol. Preferably the extraction solvent is ethanol or propylene glycol.

The method may further comprise a step of dispersing the resulting extract of step iii) or iv) in water and/or other solvents to obtain Eucalyptus extract in the form of a liquid. Suitable dispersing solvent is propylene glycol or glycerin.

The weight of Eucalyptus extract, as used in the context of the present invention, refers to the dry weight of the Eucalyptus extract. "Dry weight" as used herein, refers to the weight of material remaining after removing water and/or solvent from the Eucalyptus extract. The remaining material comprises less than 1.5% by weight of water and/or solvent, preferably less than 1.0%, more preferably less than 0.75%, more preferably still less than 0.5% and even more preferably less than 0.1 % and most preferably from 0.0 to 0.01% by weight of water and/or solvent.

Preferably the Eucalyptus extract comprises 1,8-cineole (eucalyptol), limonene, $\alpha$-pinene, $\beta$-pinene, p-cymene, $\alpha$-phellandrene, or mixtures thereof. More preferably, the Eucalyptus extract comprises 1,8-cineole, limonene, p-cymene or mixtures thereof. 1,8-cineole is the primary component in the Eucalyptus extract. Preferably the Eucalyptus extract comprises at least 20%, more preferably from 30 to 95%, even more preferably from 50 to 90% and most preferably from 60 to 80% by weight of the 1,8-cineole. An example of suitable Eucalyptus extract is Eucalyptus globulus leaf extract under the trade name IG1084 from Ingredi Biotechnology Co., Ltd.

The composition of the present invention may comprise from 0.00000001 to 5% by weight of the Eucalyptus extract, or from 0.00000005 to 3%, or from 0.0000001 to 1%, based on total weight of the composition and including all ranges subsumed therein.

Alternatively, the composition of the present invention may comprise from 0.001 to 20% by weight of the Eucalyptus extract, or from 0.01 to 15%, or from 0.05 to 10%, or from 0.1 to 5%, based on total weight of the composition and including all ranges subsumed therein.

In compositions intended to be diluted before application, the minium preferred concentrations of the chloroxylenol and the Eucalyptus extract can be higher. It is generally preferred that the concentrations of the chloroxylenol and Eucalyptus extract in the composition in the use according to the present invention are equal or higher than the optimal concentrations in the working composition, because in many typical applications, the composition is either used pure or is diluted to form the working composition. For example, when washing hands with water and a composition of the present invention, the lather produced, typically is a 50 wt% dilution of the original composition. Similary, in body wash situations, soap bars or soap liquids are typically diluted until about 8 wt% soap in water, corresponding to an approximately tenfould dilution of the product. Another example is "dilute at home product", which is concentrated product that can be diluted by the user to form a working composition. The amount of water instructed to be used is variable but it is preferrd that the dilution is at least 1:1 and preferably no more than 5:1, water to concentrated product. Therefore, the concentration of the chloroxylenol and the Eucalyptus extract in the composition is preferably such that, when the composition is diluted or dissolved with a suitable medium before or during use, the concentration in the diluted or dissolved mixture is still sufficient to be antimicrobially efficacious.

The weight ratio between the chloroxyleno and the Eucalyptus extract in the composition may be from 1:100 to 500000:1, or from 1:50 to 100000:1, or from 1:20 to 10000:1, or from 1:10 to 1000: 1, or from 1:5 to 100:1, or from 1:1 to 50:1.

The antimicrobial action of two or more active compounds is considered additive if the combined action merely results from the addition of the effects the individual components would have in isolation. In contrast, the antimicrobial action of two or more active compounds is considered to be synergistic if the combined effect of the two or more compounds is stronger than expected based on the assumption of additivity. Without wishing to be bound by theory, it is believed that the antimicrobial action of the one compound may be enhanced by the action of the other compound and vice versa. Such enhancement may for instance originate from cooperative interplay between the mechanisms of antimicrobial action at the molecular level. Such enhanced antimicrobial action may manifest itself for instance by the fact that lower concentrations of active compounds are required to obtain complete microbial kill, or alternatively, that the same extent of microbial kill is arrived at in a shorter time.

Whether a composition comprising two or more active compounds is capable of synergistic antimicrobial action may for instance be determined following the procedures and using the criteria as outlined in the examples hereafter. Typically, evidence of synergistic antimicrobial action may be provided at concentrations below the minimum inhibitory concentrations of each of the components when taken individually. However, it is generally believed that synergistic action can still occur when the concentration of one or more of the active compounds is raised above its minimum inhibitory concentration (when taken individually).

Surfactants

The composition of the present invention preferably comprises from 0.01 to 80% by weight of one or more surfactants, more preferably from 0.1 to 50%, more preferably still from 1 to 30% and most preferably from 5 to 20%, based on total weight of the composition and including all ranges subsumed therein. Any type of surfactant, i.e. anionic, cationic, non-ionic, zwitterionic or amphoteric can be used. Preferably, the one or more surfactants are anionic, non-ionic, or a combination of anionic and non-ionic surfactants. More preferably, the one or more surfactants are anionic.

A particularly preferred surfactant is soap. The soap is preferably $C_8$-$C_{24}$ soap, more preferably a $C_{10}$-$C_{20}$ soap and most preferably $C_{12}$-$C_{18}$ soap. The soap may or may not have one or more carbon-carbon double bonds or triple bonds. The cation of the soap can for instance be an alkali metal, alkaline earth metal or ammonium. Preferably, the cation of the soap is selected from sodium, potassium or ammonium. More preferably the cation of the soap is sodium or potassium.

The soap may be obtained by saponifying a fat and/or a fatty acid. The fats or oils may be fats or oils generally used in soap manufacture, such as tallow, tallow stearines, palm oil, palm stearines, soya bean oil, fish oil, castor oil, rice bran oil, sunflower oil, coconut oil, babassu oil, palm kernel oil, and others. In the above process the fatty acids are derived from oils/fats selected from coconut, rice bran, groundnut, tallow, palm, palm kernel, cotton seed, soyabean, castor etc. The fatty acid soaps can also be synthetically prepared (e.g. by the oxidation of petroleum or by the hydrogenation of carbon monoxide by the Fischer-Tropsch process). Resin acids, such as those present in tall oil, may be used. Naphthenic acids are also suitable.

Tallow fatty acids can be derived from various animal sources. Other similar mixtures, such as those from palm oil and those derived from various animal tallow and lard are also included.

It is preferable if the soap is derived from castor oil. Ricinoleic acid (85%-95%), oleic acid (2%-6%) and linoleic acid (1%-5%) are the major component acids in castor oil. An example is potassium castor oil soap. Fatty acids derived from other suitable oils/fats such as groundnut, soybean, tallow, palm, palm kernel, etc. may also be used in other desired proportions. The soap, when present in solid forms of the present invention, is preferably present in an amount of 30 to 80%, more preferably from 50 to 80%, and even more preferably 55 to 75% by weight of the composition. The soap, when present in liquid forms of the composition is preferably present in 0.1 to 30%, more preferably from 1 to 20% by weight of the composition.

Another preferred anionic surfactant may be used in the invention includes alkylbenzene sulfonates, particularly linear alkylbenzene sulfonates (LAS) with an alkyl chain length of from 10 to 18 carbon atoms. Commercial LAS is a mixture of closely related isomers and homologues alkyl chain homologues, each containing an aromatic ring sulfonated at the *"para"* position and attached to a linear alkyl chain at any position except the terminal carbons. The linear alkyl chain typically has a chain length of from 11 to 15 carbon atoms, with the predominant materials having a chain length of about C12. Each alkyl chain homologue consists of a mixture of all the possible sulfophenyl isomers except for the 1-phenyl isomer. LAS is normally formulated into compositions in acid (i.e. HLAS) form and then at least partially neutralized *in-situ.* Examples of alkylbenzene sulfonates include sodium salt of linear alkylbenzene sulphonate, alkyl toluene sulphonate, alkyl xylene sulphonate, alkyl phenol sulphonate, alkyl naphthalene-sulphonate, ammonium diamylnaphthalene-sulphonate and sodium dinonylnaphthalene-sulphonate and mixtures with olefin sulphonates.

Some alkyl sulfate surfactant (PAS) may be used, such as non-ethoxylated primary and secondary alkyl sulphates with an alkyl chain length of from 10 to 18.

Another anionic surfactant commonly used in compositions are alkyl ether sulfates having a straight or branched chain alkyl group having 10 to 18, more preferably 12 to 14 carbon atoms and containing an average of 1 to 3EO units per

molecule. A preferred example is sodium lauryl ether sulfate (SLES) in which the predominantly $C_{12}$ lauryl alkyl group has been ethoxylated with an average of 2EO units per molecule.

The composition of the present invention preferably comprises from 0.01 to 80%, more preferably from 0.1 to 50%, more preferably still from 1 to 30% and most preferably from 5 to 20% by weight of anionic surfactants, based on total weight of the composition and including all ranges subsumed therein.

The composition may comprise non-ionic surfactants. A preferred class of non-ionic surfactant for use in the present invention includes $C_8$ to $C_{18}$ alkyl alcohol ethoxylates, more preferably $C_{12}$ to $C_{15}$ primary linear alcohol ethoxylates with an average of from 3 to 20, more preferably from 3 to 10 moles of ethylene oxide per mole of alcohol. Particularly preferred are lauryl alcohol condensed with 3, 5, 7 and 9 moles of EO (AEO-3, AEO-5, AEO-7 and AEO-9).

A further class of preferred non-ionic surfactant include the alkoxylated glycerol esters, methyl ester ethoxylates, fatty acid amides, alkyl poly glucosides and rhamnolipids.

The composition may also comprise one or more types of amphoteric surfactant. Specific amphoteric (zwitterionic) surfactants include alkyl amine oxides, alkyl betaines, alkyl amidopropyl betaines, alkyl sulfobetaines (sultaines), alkyl glycinates, alkyl carboxyglycinates, alkyl amphoacetates, alkyl amphopropionates, alkylamphoglycinates, alkyl amidopropyl hydroxysultaines, acyl taurates and acyl glutamates, having alkyl radicals containing from about 8 to about 22 carbon atoms, the term "alkyl" being used to include the alkyl portion of higher acyl radicals. Amphoteric (zwitterionic) surfactant, when included, may be present in an amount ranging from 0 to 5% based on total weight of the composition.

The composition may also comprise one or more types of cationic surfactant. Many cationic surfactants are known in the art, and almost any cationic surfactant having at least one long chain alkyl group of about 10 to 24 carbon atoms may be present as an auxiliary component of the surfactant system. Such compounds are described in "Cationic Surfactants", Jungermann, 1970, incorporated by reference.

Most preferably the cationic surfactant is quaternary ammonium compound. Examples of suitable quaternary ammonium compound for use in this invention includes, didecyl dimethyl ammonium chloride, dioctyl dimethyl ammonium chloride, alkyl dimethyl benzyl ammonium chloride, diisobutyl phenoxy ethoxy ethyl dimethyl benzyl ammonium chloride, alkyl dimethyl benzyl ammonium saccharinate, octyl decyl dimethyl ammonium chloride, alkyl dimethyl ethyl benzyl ammonium chloride, methyldodecylbenzyl ammonium chloride, methyldodecylxylene-bis-trimethyl ammonium chloride, methyl benzethonium chloride, cetyl pyrinidinium chloride, cetrimonium bromide or mixtures thereof. Preferably, the quaternary ammonium compound is alkyl dimethyl benzyl ammonium chloride, which includes, for example, benzalkonium chloride (BKC), diisobutyl phenoxy ethoxy ethyl dimethyl benzyl ammonium chloride (benzethonium chloride; BZC), methyl benzethonium chloride, cetyl pyrinidinium chloride, cetrimonium bromide or mixtures thereof. Benzalkonium chloride is particularly preferred.

The compositions of the invention may use cationic surfactants alone or in combination with any of the other surfactants known in the art. Cationic surfactant, when included, may be present in an amount ranging from 0 to 5% based on total weight of the composition.

Carrier

The composition of the present invention preferably comprises a carrier. Preferably, the carrier is selected from the group consisting of solvent, oil, inorganic particulate material, starch, air and mixtures thereof. The carrier is preferably from 0.1 to 99% based on total weight of the composition. Examples of oils include mineral oils, oils of biological origin (e.g. vegetable oils), and petroleum-derived oils and waxes. The oils of biological origin are preferably triglyceride-based. Preferably, the carrier oil is not a perfume oil. Thus, the carrier oil preferably does not substantially contribute to the odour of the composition, more preferably it does not contribute to that odour. Examples of inorganic particulate materials include clay, talc, calcite, dolomite, silica, and aluminosilicate. The starch may be natural starch obtained from food grains or may be a modified starch.

In certain preferred embodiments, suitable solvents include, for example, water; glycols, including ethylene glycol, propylene glycol, diethylene glycol, dipropylene glycol, polyethylene glycol, and polypropylene glycol; glycol ethers; alcohols, such as methanol, ethanol, propanol, phenethyl alcohol and phenoxypropanol; ketones, including acetone and methyl ethyl ketone; esters, including ethyl acetate, butyl acetate, triacetyl citrate, and glycerol triacetate; carbonates, including propylene carbonate and dimethyl carbonate; and mixtures thereof. It is preferred that the solvent is selected from water, alcohols, glycols, glycol ethers, esters and mixtures thereof.

Alternatively, it is preferred that the carrier comprises water, ethanol, propanol, isopropanol, ethylene glycol, propylene glycol, diethylene glycol or a mixture thereof.

In certain preferred embodiments, suitable solid carriers include, for example, cyclodextrin, silicas, diatomaceous earth, waxes, cellulosic materials, alkali and alkaline earth (e.g., sodium, magnesium, potassium) metal salts (e.g., chloride, nitrate, bromide, sulfate) and charcoal. Particularly preferred carriers are water or oil/solvent and even more preferred is a carrier that is a mixture of water and oil. Thus, in many of the envisaged applications such as personal care/washing, oral care and hard/soft surface cleaning, the composition may be formulated with either an aqueous base or

an oil/solvent base. Compositions with an aqueous base (water being the carrier), may also for instance be products in gel format. Compositions with a purely oil/solvent base may for instance be products in anhydrous stick form or propellant-containing products.

Thus, the composition may for instance, preferably be an anhydrous stick personal care composition on a purely oil/solvent base wherein the composition has a water content of less than 0.01 wt%, and wherein the composition is preferably free of water. Alternatively, the composition may for instance, preferably be a propellant-drivable personal care composition, also comprising a propellant. Air can also be used as propellant, for instance in the form of compressed or liquefied air. However, the most preferred product format has an emulsion base (water and/or oil being the carrier) or is capable of forming an emulsion upon dilution, e.g. soap products in liquid, solid, lotion or semi-solid form for hand washing, face washing, body washing, or shaving applications; toothpaste/ dentifrices for oral care applications or products for hard surface cleaning in bar or liquid form. If the product comprises an emulsion base, it preferably also comprises one or more surfactants as described herein.

The composition of the present invention may be in form of a solid, a liquid, a gel or a paste. A person skilled in the art can prepare compositions in various formats by choosing one or more carrier materials and/or surfactant. The compositions of the present invention are useful for cleaning and care. It is envisaged that the composition can be used as either a leave-on product or a wash-off product, preferably a wash-off product. The composition of the present invention can also be used for cleaning and care of hard surfaces such as glass, metal, plastic and the like.

A particularly preferred carrier is water. When water is present, it is preferably present in at least 1 wt%, more preferably at least 2 wt%, furthermore preferably at least 5 wt%. When water is the carrier, both liquid and solid compositions are possible. Different amounts of water may be preferred depending on the product format.

Inorganic particulate material is also a suitable carrier. When inorganic particulate material is the carrier, the composition of the present invention is in a solid form. Preferably the inorganic particulate material is talc. When the composition is a solid, the composition is preferably in form of a shaped solid, more preferably a bar. The solid composition is particularly useful for skin cleaning, in particular for hand washing or a face washing. Such a bar-shaped solid composition may be a soap bar. Soap bar compositions are well-known and may be similar to the following non-limiting example composition, comprising 75.6 wt% of anhydrous sodium soap, 1.0 wt% of glycerine, 0.5 wt% of sodium carbonate, 0.2 wt% of EHDP (ethane-1-hydroxy-1,1-disphosphonate) acid, 0.04 wt% of EDTA (ethylenediaminetetraacetic acid) tetrasodium salt, 8.5 wt % of hydrated magnesium silicate (Talc), 0.7 wt% of sodium chloride, 0.05 wt% of dyes, 0.75 wt% perfume and water up to 100 wt%.

A solvent different from water is a preferred carrier. Although any solvent can be used, alcohol is a preferred solvent. Short chain alcohols, in particular ethanol, propanol, and isopropanol, are particularly preferred as carrier for an antimicrobial wipe or an antimicrobial hand sanitiser composition.

The composition may further comprise various additional ingredients known to a person skilled in the art. Such additional ingredients include, but are not limited to: perfumes, pigments, preservative, emollients, sunscreens, emulsifiers, gelling agents, thickening agents, humectants (e.g. glycerine, sorbitol), sequestrants (e.g. EDTA) or polymers (e.g. cellulose derivatives for structuring such as methyl cellulose).

It is particularly preferred that the composition of the present invention is in liquid form. It is preferred that the composition comprises water in an amount of from 10 to 95%, more preferably from 20 to 90%, more preferably still from 30 to 85% and most preferably from 40 to 80% by weight of the composition.

The composition of the present invention may be concentrated or dilute. A "concentrated" composition refers to a composition comprising up to 50% by weight of water, for example up to 40%, up to 30% or up to 20%, based on total weight of the composition. Preferably, the composition of the present invention is a "dilute" composition. A "dilute" composition refers to a composition comprising greater than 50% by weight of water, for example greater than 60%, greater than 70% or greater than 80%.

Preferably the composition of the invention is a home care composition or a personal care composition. Most preferably the composition of the invention is a home care composition, particularly a hard surface cleaning composition, a disinfectant or a laundry composition.

Methods

The composition of the present invention also relates to a method of cleaning and/or disinfecting a surface comprising the steps of:

(i) applying a composition of the present invention to the surface;
(ii) optionally removing the composition from the surface.

The surface is preferably a hard surface. Such hard surfaces are typically those commonly require cleaning, sanitisation or disinfection. Such surfaces may be found in many household or industrial environments, and may include

for example kitchen and bathroom surfaces, table tops, floors, walls, windows, utensils, cutlery and crockery. Such surfaces may be made from different materials, including for instance plastics, wood, metal, ceramics, glass, concrete, marble and painted surfaces. In another preferred embodiment, the surface is a laundry surface. The laundry surface is preferably any textile surface to be laundered such as a surface of clothes, fabrics and/or cloth fibres. In another preferred embodiment, the surface is a skin surface including human or animal skin, for example, a surface like the hands, face, body, or the oral cavity.

Following step (i), the method may comprise a step (ii) of removing the composition from the surface. Here, removing the composition also encompasses partially removing the composition, because traces of the composition may remain on the surface. In many typical situations, including washing of the skin or hard surface cleaning, it is acceptable or sometimes even desirable if part of the composition - in particular certain active ingredients - remains on the surface. Therefore, step (ii) preferably involves removing at least 5%, more preferably at least 10%, even more preferably at least 25%, still more preferably at least 50% and yet more preferably at least 75% of the composition by weight. Preferably, the step of removing the composition comprises rinsing the surface with a suitable solvent or wiping the surface with a suitable wipe, more preferably, this step consists of rinsing the surface with a suitable solvent or wiping the surface with a suitable wipe. Alternatively, the removal step can also include evaporation of part of the composition, for example when the composition comprises volatile components, e.g. solvents.

A suitable medium for rinsing the surface is water but it could also be for example a mixture of water and alcohol. It is then rinsed preferably with sufficient amounts of water after a predetermined period of time to remove any visible or sensory residue of the composition.

Alternatively, an alcohol wipe or a water/alcohol impregnated wipe may be used to wipe the surface to be visibly free of the anti-microbial composition. The step of removing the composition (e.g. by rinsing or wiping the surface) is started less than 30 minutes, more preferably less than 20 minutes, still more preferably less than 15 minutes and even more preferably less than 10 minutes after commencement of the step of applying the composition on the surface. Even though partial microbial kill may be almost instantaneous upon application of the composition according to the invention, it is preferred that the step of removing the composition from the surface is started out at least 1 minute, preferably at least 5 minutes, more preferably at least 10 minutes after commencement of the step of applying the composition on the surface, in order to effect optimal antimicrobial action. Combinations of these times into time intervals are preferred too. When cleaning and/or disinfecting a hard surface, it is particularly preferred that the step of removing the composition from the surface (i.e. step (ii)) is started between 1 minutes and 30 minutes, more preferably between 3 minute and 20 minutes, even more preferably between 5 minutes and 10 minutes after commencement of the step of applying the composition on the surface (i.e. step (i)). When cleaning and/or disinfecting a laundry surface, it is particularly preferred that the step of removing the composition from the surface (i.e. step (ii)) is started between 5 minutes and 30 minutes, more preferably between 10 minute and 25 minutes, even more preferably between 15 minutes and 20 minutes after commencement of the step of applying the composition on the surface (i.e. step (i)).

## Uses

The composition of the present invention can be applied for cleaning and/or disinfection, reduction in viable microbial count or improved hygiene, especially at a surface.

The surface is preferably a hard surface. Such hard surfaces are typically those commonly require cleaning, sanitisation or disinfection. Such surfaces may be found in many household or industrial environments, and may include for example kitchen and bathroom surfaces, table tops, floors, walls, windows, utensils, cutlery and crockery. Such surfaces may be made from different materials, including for instance plastics, wood, metal, ceramics, glass, concrete, marble and painted surfaces. In another preferred embodiment, the surface is a laundry surface. The laundry surface is preferably any textile surface to be laundered such as a surface of clothes, fabrics and/or cloth fibres. In another preferred embodiment, the surface is a skin surface including human or animal skin, for example, a surface like the hands, face, body, or the oral cavity.

The present invention also relates to use of a composition of the present invention for cleaning and/or disinfecting a surface, in particular, a hard surface or a laundry surface.

The present invention also relates to non-therapeutic use of a composition of the present invention for cleaning and/or disinfecting a skin surface.

The following examples are provided to facilitate an understanding of the present invention. The examples are not provided to limit the scope of the claims.

## Examples

### Example 1

*General method for assessment of antimicrobial synergy*

Minimum inhibitory concentration (MIC) of the individual actives were determined by observing the lowest concentration at which no visible growth is observed.

The differing behaviours of inhibitory antimicrobials in isolation and mixtures have been widely explored using the concept of the Fractional Concentration and Fractional Inhibitory Concentration (FIC). See for instance J.R.W. Lambert and R. Lambert, J. Appl. Microbiol 95, 734 (2003); T. Jadavji, C.G. Prober and R. Cheung, Antimicrobial Agents and Chemotherapy 26, 91 (1984), Hall MJ, Middleton RF, & Westmacott D (1983), and WO 2004/006876. These parameters can be defined as follows:

FIC (component A) = [MIC (component A tested in the mixture)] / [MIC (component A tested as a single active)]

Similarly, FIC (component B) = [MIC (component B tested in the mixture)] / [MIC (component B tested as a single active)]

$$\sum FIC = FIC \text{ (component A)} + FIC \text{ (component B)}$$

The sum of the fraction inhibitory concentration (ΣFIC) is widely used in the context of combinations of antimicrobial actives. It is a tool to determine whether the antimicrobial actives (when used in combination) have synergistic effect or antagonistic effect or neither of the two, i.e., an additive effect.

ΣFIC = 1 corresponds to additive antimicrobial activity, which is not acceptable
ΣFIC > 1 corresponds to antagonistic antimicrobial activity, which is not acceptable
ΣFIC < 0.9 corresponds to synergistic antimicrobial activity

*Experimental methods*

Concentration of actives are expressed by weight percentage.

*Microbe culture and preparation*

*S.aureus* (ATCC6538), *M.luteus* (CICC10209), *S.hominis* (ATCC27844) and *M.osloensis* (ATCC19976) were each incubated into Tryptone Soya Broth (TSB, Oxoid: CM0129) and incubated in a shaking incubator at 36 °C for 1 day. The suspension containing the microbe was then diluted 10-times with TSB and incubated again on Tryptic Soy Agar (TSA, Oxoid) at 36 °C for another 1 day. The inoculum was further diluted by Phosphate Buffer Saline to get around $10^5$ cells /ml.

*Preparation of stock solutions of the antimicrobial actives to be tested*

Chloroxylenol: 0.5% chloroxylenol stock solution (5000 ppm) was prepared in ethanol, and 2-fold serially diluted in TSB to prepare working solutions with various concentrations.

Eucalyptus Globulus leaf extract: the Eucalyptus Globulus leaf extract is from Ingredi Biotechnology Co., Ltd. 8.39% Eucalyptus Globulus leaf extract stock solution (83900 ppm) was prepared in water, and 2-fold serially diluted in TSB to prepare working solutions with various concentrations.

*ΣFIC test*

The antimicrobial effect of the combination of chloroxylenol and Eucalyptus Globulus leaf extract against each strain was evaluated using a standard 96-well plate checkerboard analysis.

50 μl of chloroxylenol working solution and 50 μl of Eucalyptus Globulus leaf extract working solution were mixed in corresponding wells of a 96-well plate. 10 μl fresh-made bacteria suspension was added in each well (except the negative control) of the same plate. The plate was incubated at 36 °C for 18h. 10 μl resazurin was added into each well with a further incubation to 24h to observe the color change. Pink-red color indicated growth of microbes, and the blue-purple color indicated no growth or inhibition of growth of microbes.

*Results*

*The* ΣFIC is calculated using the formula given above. The results were reported in Table 1.

**Table 1**

| Strain | ΣFIC |
|---|---|
| *S.aureus* | 0.750 |
| *M.luteus* | 0.750 |
| *S.hominis* | 0.516 |
| *M.osloensis* | 0.75 |

It can be seen from the table above that combinations of chloroxylenol and Eucalyptus consistent with the present invention provided a synergistic antimicrobial benefit.

## Claims

1. A composition comprising: a) chloroxylenol; and b) Eucalyptus extract.

2. The composition according to claim 1, wherein the Eucalyptus extract is Eucalyptus Globulus leaf extract.

3. The composition according to claim 1 or claim 2, wherein the Eucalyptus extract comprises 1,8-cineole, limonene, α-pinene, β-pinene, p-cymene, α-phellandrene or mixtures thereof, preferably 1,8-cineole, limonene, p-cymene or mixtures thereof.

4. The composition according to any of the preceding claims, wherein the Eucalyptus extract comprises at least 20%, preferably from 30 to 95% by weight of 1,8-cineole.

5. The composition according to any of the preceding claims, wherein the composition comprises from 0.001 to 20%, preferably from 0.01 to 15% by weight of chloroxylenol.

6. The composition according to any of the preceding claims, wherein the composition comprises from 0.00000001 to 5%, preferably from 0.00000005 to 3% by weight of the Eucalyptus extract.

7. The composition according to any of the preceding claims, wherein the weight ratio between the chloroxylenol and the Eucalyptus extract ranges from 1:100 to 500000:1, preferably from 1:50 to 100000:1.

8. The composition according to any of preceding claims, wherein the composition further comprises an anionic surfactant.

9. The composition according to claim 8, wherein the anionic surfactant comprises soap.

10. The composition according to claim 8 or claim 9, wherein the composition comprises from 0.01 to 80%, preferably from 0.1 to 50% by weight of the anionic surfactant.

11. The composition according to any of the preceding claims, wherein the composition is a home care composition, preferably a hard surface cleaning composition, a disinfectant, or a laundry composition.

12. A method of cleaning and/or disinfecting a surface comprising the steps of: i) applying a composition according to any one of the preceding claims to the surface; and ii) optionally removing the composition from the surface.

13. The method according to claim 12, wherein the surface is hard surface, preferably the hard surface is kitchen and bathroom surfaces, table tops, floors, walls, windows, utensils, cutlery and crockery.

14. Use of a composition according to any of claims 1 to 11 for cleaning and/or disinfecting a surface, preferably a hard

surface.

**15.** Non-therapeutic use of a composition according to any one of claims 1 to 11 for cleaning and/or disinfecting a skin surface.

Europäisches Patentamt
European Patent Office
Office européen des brevets

# EUROPEAN SEARCH REPORT

Application Number
EP 24 21 6269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE GNPD [Online] MINTEL; 8 September 2021 (2021-09-08), anonymous: "Antiseptic Antibacterial Liquid", XP093267492, Database accession no. 8997522 * abstract * ----- | 1-8, 11-15 | INV. A01N31/08 A01N43/90 A01P1/00 A01N65/28 A01N27/00 |
| X | DATABASE GNPD [Online] MINTEL; 8 June 2022 (2022-06-08), anonymous: "Herbal Moisture Plus Medicated & Anti-Bacterial Soap Bar", XP093267621, Database accession no. 9645028 * abstract * ----- | 1-15 | |
| X | DATABASE GNPD [Online] MINTEL; 24 March 2023 (2023-03-24), anonymous: "Eucalyptus Anti-Bacterial Liquid Soap", XP093267495, Database accession no. 10680314 * abstract * ----- | 1-15 | TECHNICAL FIELDS SEARCHED (IPC) A01N A01P |
| X | DATABASE GNPD [Online] MINTEL; 19 April 2022 (2022-04-19), anonymous: "Anti-Bacterial Shower Cream", XP093267509, Database accession no. 9528216 * abstract * ----- -/-- | 1-15 | |

The present search report has been drawn up for all claims

| Place of search | Date of completion of the search | Examiner |
|---|---|---|
| Munich | 7 April 2025 | Davies, Maxwell |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number

EP 24 21 6269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE GNPD [Online] MINTEL; 16 December 2019 (2019-12-16), anonymous: "Cooling Body Wash", XP093267512, Database accession no. 7055887 * abstract * ----- | 1-15 | |
| | | | TECHNICAL FIELDS SEARCHED (IPC) |

The present search report has been drawn up for all claims

2

| Place of search | Date of completion of the search | Examiner |
|---|---|---|
| Munich | 7 April 2025 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004006876 A


### Non-patent literature cited in the description


- **J.R.W. LAMBERT** ; **R. LAMBERT**. *J. Appl. Microbiol*, 2003, vol. 95, 734
- **T. JADAVJI** ; **C.G. PROBER** ; **R. CHEUNG**. *Antimicrobial Agents and Chemotherapy*, 1984, vol. 26, 91